# EUROPEAN PATENT APPLICATION

(11) **EP 4 617 687 A2**
(43) Date of publication of application: **17.09.2025**
(21) Application number: 25161565.4
(22) Date of filing: 04.03.2025
(51) Int. Cl.: G01R 31/08

(54) **AI ALGORITHM BALLOTING SYSTEM FOR COMPLEX ELECTRICAL EVENTS AND ISSUES**

(30) Priority: 13.03.2024 US 202463564607 P; 22.04.2024 US 202418641772
(71) Applicant: Schneider Electric USA, Inc., Boston, MA 02108 (US)
(72) Inventor: Bickel, Jon A., Murfreesboro, TN, 37129 (US); Sabin, Daniel D., Danvers, MA, 01923 (US)
(74) Representative: Friese Goeden Patentanwälte PartGmbB

(57) **Abstract**

Fault or disturbance location detection in an electrical system. Energy-related data in the electrical system is captured using at least one intelligent electronic device (IED) and analyzed to identify fault or disturbance events in the electrical system. The outputs of a plurality of fault or disturbance location detection algorithms include independently ascertained location(s) of the faults or disturbances and a weighted ballot is applied to each of the outputs. The outputs are compiled for determining and providing an indication of the location(s). Compiling the plurality of outputs strengthens the conclusiveness and indicates a higher confidence in the determined location.

## Description

### FIELD

The present disclosure relates generally to electrical/power systems, and more particularly, to systems and methods for monitoring and assessing energy-related data in an electrical system.

### BACKGROUND

The Disturbance Direction Detection (DDD) feature, which was developed and launched in the early 2000s, can determine if a voltage disturbance occurs upstream or downstream of an intelligent electronic device (IED)/meter. While this feature is still an important market differentiator, improvements are desired.

For instance, analyzing waveform captures derived from waveform capture data is an effective method of troubleshooting potentially harmful electrical events (e.g., an undesirable voltage sag or voltage swell on the electrical system). But human operators are typically required to diagnose an electrical event from a waveform capture, which can be difficult or even impossible without years of experience, understanding of the IED configuration, and/or context of the electrical system. An IED, such as a power metering device, is typically configured to monitor and record a time-series of data samples and may be equipped with waveform capture technology to generate waveform captures in response to electrical events. However, each waveform capture must be manually analyzed by an experienced professional to interpret and/or diagnose aspects associated with the electrical event. Additionally, manually reviewing data (e.g., even by an expert) can be a slow, inefficient, and sometimes, expensive means of troubleshooting electrical events.

Commonly assigned U.S. Patent No. 7,138,924 discloses methods and systems of disturbance direction detection in a power monitoring system.

### SUMMARY

Aspects of the present disclosure provide a much more consistent, thorough, and accurate approach to helping electrical customers locate the source or origin of disturbances and/or faults inside or outside their electrical system. In particular, aspects herein bring an important, unique, and long overdue improvement to DDD for mid/high-end meters, software, cloud-based applications, and protection devices.

In an aspect, a method for improving fault or disturbance location detection includes capturing energy-related data in an electrical system using at least one IED, analyzing the energy-related data to identify fault or disturbance events in the electrical system and, in response to identifying at least one fault or disturbance event, selecting and applying a plurality of fault or disturbance location detection algorithms to the energy-related data to independently ascertain location(s) of the at least one fault or disturbance. In addition, the method comprises compiling outputs of the plurality of fault or disturbance location detection algorithms. These outputs include the independently ascertained location(s) of the at least one fault or disturbance and a weighted ballot is applied to each of the outputs. The method also includes determining and providing an indication of location(s) of the at least one fault or disturbance based on an analysis of the compiled outputs.

In another aspect, a method for detecting a location of a disturbance event in an electrical system comprises acquiring, by at least one IED of an electrical system, energy-related signals associated with the electrical system and processing the energy-related data to identify an occurrence of at least one disturbance event in the electrical system. In response to identifying the occurrence of the at least one disturbance event, the method applies each of a plurality of disturbance event location detection algorithms to the energy-related data. Each of the applied disturbance event location detection algorithms generates an output representative of an independently ascertained candidate location of the at least one disturbance event relative to the IED. The method further comprises combining the outputs of the disturbance event location detection algorithms to determine a location or origin of the at least one disturbance event from the candidate locations based on an analysis of the combined outputs.

In yet another embodiment, a system for detecting a location of a disturbance event in an electrical system comprises at least one IED communicatively coupled to an electrical system and configured to acquire energy-related signals associated with the electrical system. The system also includes a processor receiving and responsive to the energy-related signals acquired by the at least one IED and a memory storing processor-executable instructions. When executed, the instructions configure the processor to process the energy-related data to identify an occurrence of at least one disturbance event in the electrical system and, in response to identifying the occurrence of the at least one disturbance event, apply each of a plurality of disturbance event location detection algorithms to the energy-related data. Each of the applied disturbance event location detection algorithms generates an output representative of an independently ascertained candidate location of the at least one disturbance event relative to the IED. When executed, the instructions further configure the processor to combine the outputs of the disturbance event location detection algorithms to determine a location or origin of the at least one disturbance event from the candidate locations based on an analysis of the combined outputs.

Other objects and features of the present invention will be in part apparent and in part pointed out herein.

### BRIEF DESCRIPTION OF THE DRAWINGS

FIG. 1 illustrates an exemplary electrical system in accordance with embodiments of the disclosure.
FIG. 2 illustrates another exemplary electrical system in accordance with embodiments of the disclosure.
FIG. 3 is a flow diagram illustrating an exemplary process for analyzing waveform capture data in accordance with embodiments of the disclosure.
FIG. 4A illustrates example instantaneous waveform captures of three-phase voltages and currents during a phase-to-phase voltage sag event in accordance with embodiments of the disclosure.
FIG. 4B illustrates an example of preprocessing the instantaneous waveform captures of FIG. 4A in accordance with embodiments of the disclosure.
FIG. 4C illustrates examples of corresponding root-mean-square (rms) values by phase of the instantaneous waveform captures of FIG. 4B in accordance with embodiments of the disclosure.
FIG. 4D illustrates examples of derived three-phase real power and total real power values during the phase-to-phase voltage sag event of FIG. 4B in accordance with embodiments of the disclosure.
FIG. 5A illustrates example instantaneous waveform captures of three-phase voltages and currents during a single-phase voltage sag event in accordance with embodiments of the disclosure.
FIG. 5B illustrates examples of corresponding root-mean-square (rms) values by phase of the instantaneous waveform captures of FIG. 5A in accordance with embodiments of the disclosure.
FIG. 5C illustrates examples of derived three-phase real power and total real power values during the single-phase voltage sag event of FIG. 5A in accordance with embodiments of the disclosure.
FIGS. 6A and 6B illustrates two exemplary digital waveform captures taken from the same analog event signal at two different sampling rates in accordance with embodiments of the disclosure.
FIG. 7 illustrates an exemplary electric power management system (EPMS) identifying a location of a fault condition within the system in accordance with embodiments of the disclosure.

Corresponding reference characters indicate corresponding parts throughout the drawings.

### DETAILED DESCRIPTION

The features and other details of the concepts, systems, and techniques sought to be protected herein will now be more particularly described. It will be understood that any specific embodiments described herein are shown by way of illustration and not as limitations of the disclosure and the concepts described herein. Features of the subject matter described herein can be employed in various embodiments without departing from the scope of the concepts sought to be protected.

Aspects of the present disclosure incorporate multiple algorithms to independently ascertain a location of a disturbance event (e.g., a fault or disturbance) upstream or downstream, for example, from an IED or within a system (when two or more IEDs are used). Once the fault/disturbance data is processed independently using each algorithm, the outputs combined (either mathematically, statistically, or through some other analytics methodology) and used provide the most correct or valid conclusion.

Outputs may be weighted, for example, depending on specific applications, market segments, installations, and/or risks. Weighted balloting may be used, for example, to determine the final outcome (i.e., indication of location(s) of the at least one fault or disturbance based on an analysis).

Empirical data has been used to determine each outcome may be different for various reasons; however, a comprehensive approach using combined algorithms provides a much better confidence for customers.

For instance, a voltage sag is a short duration reduction in root-mean-square (rms) voltage typically caused by disturbance event such as a short circuit or fault, the energizing of a transformer, or the start-up of an electric motor. Voltage sags are frequently associated with voltage swells, particularly when the cause is a ground fault. Of the seven power quality categories defined by Institute of Electrical and Electronics Engineers (IEEE) Standard 1159-2019, short-duration rms variations are the most disruptive and have the largest universal economic impact on energy consumers. One study by Electric Power Research Institute (EPRI) estimates an average of 56 voltage sags are experienced by power customers each year. A study from 2008 concluded that industrial sectors lose upwards of €150 billion as a direct result of their electrical power installations not being sufficiently reliable and resilient for todays and future operating demands. This would be an equivalent of €180 billion today. As industries become increasingly dependent on equipment that is sensitive to voltage sags, the impact of these events has become more important.

Analyzing waveform captures derived from waveform capture data is an effective method of troubleshooting potentially-harmful electrical events (e.g., undesirable voltage sags or voltage swells on the electrical system). Human operators are typically required to diagnose an electrical event from a waveform capture, which can be difficult or even impossible without years of experience. As discussed above, an intelligent electronic device (IED), such as a power metering device, is typically configured to monitor and record a time-series of data samples and may be equipped with waveform capture technology to generate waveform captures in response to electrical events. However, each waveform capture must be manually analyzed by an experienced specialist to diagnose an electrical event. Manual data review by an operator is a slow and inefficient means of troubleshooting electrical events.

Voltage sags are normally characterized by the minimum rms voltage detected during the event and the duration of time when the rms voltage is below voltage sag thresholds. Likewise, voltage swells are characterized by their maximum rms voltage. The impact of a voltage sag on end-use equipment is often estimated by evaluating where the voltage sag would be represented in tolerance curves defined by the Information Technology Industry Council (ITIC) or the SEMI F-47 voltage sag immunity standard. Tolerance curves are useful tools for summary reports, but they are general recommendations for specific applications at explicit voltage levels. They do not accurately predict how a specific system or piece of equipment will respond to a voltage sag event, what the event's impact will be to the electrical system, or how and where to economically mitigate the issue.

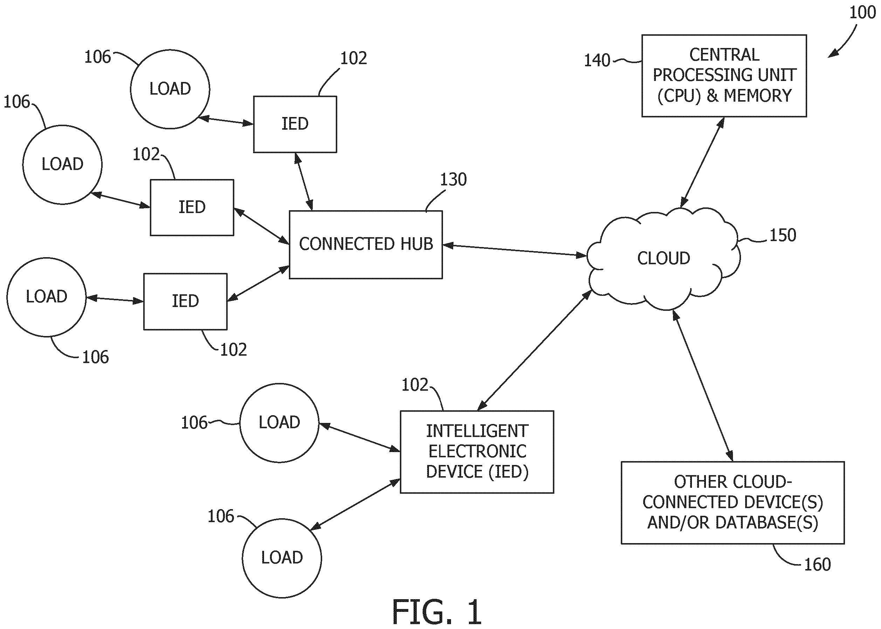

Referring to FIG. 1, an example electrical system 100 in accordance with embodiments of the disclosure includes one or more intelligent electronic devices (IEDs) 102 capable of sampling, sensing, or monitoring one or more parameters (e.g., power monitoring parameters) associated with one or more loads 106 (also sometimes referred to herein as "equipment" or "apparatuses"). Although indicated with the same reference numeral, it is to be understood that the IEDs 102 may differ from each other (e.g., IEDs with different features and capabilities, etc.) and loads 106 may differ from each other (e.g., motors, lighting, computer servers, etc.) depending on the specific design and features of the electrical system 100. In embodiments, loads 106 and IEDs 102 may be installed in one or more buildings or other physical locations or they may be installed on one or more processes and/or loads within a building. The buildings may correspond, for example, to commercial, industrial, or institutional buildings.

As shown in FIG. 1, IEDs 102 are each coupled to one or more of the loads 106, which may be located "upline/upstream" or "downline/downstream" from the IEDs in some embodiments. The loads 106 include, for example, machinery or apparatuses associated with a particular application (e.g., an industrial application), applications, and/or process(es). The machinery may include electrical or electronic equipment, for example. The machinery may also include the controls and/or ancillary equipment associated with the equipment. In accordance with aspects of the present disclosure, loads 106 comprise a mix of single-phase and three-phase loads (e.g., motors).

In embodiments, IEDs 102 may monitor and, in some embodiments, analyze parameters (e.g., energy-related parameters) associated with loads 106 to which they are coupled. For instance, IED 102 (e.g., a metering device) captures energy-related waveforms in electrical system 100. As used herein, an IED is a computational electronic device optimized to perform a particular function or set of functions. Examples of IEDs 102 include smart utility meters, power quality meters, microprocessor relays, digital fault recorders, and other metering devices. The IEDs 102 may also be embedded in variable speed drives (VSDs), uninterruptible power supplies (UPSs), circuit breakers, relays, transformers, or any other electrical apparatus. In addition, IEDs 102 may be used to perform measurement/monitoring and control functions in a wide variety of installations. The installations may include utility systems, industrial facilities, warehouses, office buildings or other commercial complexes, campus facilities, computing co-location centers, data centers, power distribution networks, or any other structure, process or load that uses electrical energy. For example, where IED 102 is an electrical power monitoring device, it may be coupled to (or be installed in) an electrical power transmission or distribution system and configured to sense/measure and store data (e.g., waveform data, logged data, I/O data, etc.) as electrical parameters representing operating characteristics (e.g., voltage, current, waveform distortion, power, etc.) of the electrical distribution system. These parameters and characteristics may be analyzed by a user to evaluate potential performance, reliability and/or power quality-related issues, for example. One or more of the IEDs 102 may include at least a controller (which in certain IEDs can be configured to run one or more applications simultaneously, serially, or both), firmware, a memory, a communications interface, and connectors that connect the IED to external systems, devices, and/or components at any voltage level, configuration, and/or type (e.g., AC, DC). At least certain aspects of the monitoring and control functionality of IED 102 may be embodied in a computer program that is accessible by the IED.

In some embodiments, the term "IED" as used herein may refer to a hierarchy of IEDs operating in parallel and/or tandem (series). For example, an IED may correspond to a hierarchy of energy meters, power meters, and/or other types of resource meters. The hierarchy may comprise a tree-based hierarchy, such a binary tree, a tree having one or more child nodes descending from each parent node or nodes, or combinations thereof, wherein each node represents a specific IED. In some instances, the hierarchy of IEDs may share data or hardware resources and may execute shared software. It is understood that hierarchies may be non-spatial such as billing hierarchies where IEDs grouped together may be physically unrelated.

According to another aspect, IEDs 102 may detect overvoltage and undervoltage conditions (e.g., transient overvoltages), as well as other parameters such as temperature, including ambient temperature. According to a further aspect, IEDs 102 may provide indications of monitored parameters and detected conditions that can be used to control loads 106 and other equipment in the electrical system 100 in which loads 106 and IEDs 102 are installed. A wide variety of other monitoring and/or control functions can be performed by IEDs 102 and the aspects and embodiments disclosed herein are not limited to IEDs 102 operating as described in the above-mentioned examples.

It is to be understood that IEDs 102 may take various forms and may each have an associated complexity (or set of functional capabilities and/or features). For example, one IED 102 is a "basic" IED while another IED 102 is an "intermediate" IED and yet another IED 102 is an "advanced" IED. In such embodiments, the intermediate IED may have more functionality (e.g., energy measurement features and/or capabilities) than the basic IED, and advanced IED may have more functionality and/or features than both the intermediate IED and the basic IED. For example, in embodiments IED 102 (e.g., an IED with basic capabilities and/or features) may be capable of monitoring instantaneous voltage, current energy, demand, power factor, averages values, maximum values, instantaneous power, and/or long-duration rms variations and/or IED 102 (e.g., an IED with advanced capabilities) may be capable of monitoring additional parameters such as voltage transients, voltage fluctuations, frequency slew rates, harmonic power flows, and discrete harmonic components, all at higher sample rates, etc. It is understood that this example is for illustrative purposes only, and likewise in some embodiments an IED with basic capabilities may be capable of monitoring one or more of the above energy measurement parameters that are indicated as being associated with an IED with advanced capabilities. It is also understood that in some embodiments the IEDs 102 each have independent functionality.

In the example embodiment of FIG. 1, IEDs 102 are communicatively coupled to a central processing unit (CPU) 140 (and associated memory) via a data communications network shown as "cloud" 150. In some embodiments, IEDs 102 may be directly communicatively coupled to the cloud 150. In other embodiments, IEDs 102 may be indirectly communicatively coupled to cloud 150 via, for example, an intermediate device such as a connected hub 130 (or a gateway) providing IEDs 102 with access to cloud 150 and CPU 140. Additional cloud-connected devices and/or databases are indicated at reference character 160.

Commonly assigned U.S. Patent Application Publication No. 2023/0152833 discloses a cloud-connected electrical system in which aspects of the present disclosure may be used.

Metered data from IEDs 102 is one of the most important sources available to solve problems that occur in an electrical system, such as system 100. Today's meters provide ample feedback for detecting, isolating, and resolving ongoing problems. However, too much data can result in information overload, overwhelming even the most learned user. As electrical metering incorporates more sophisticated functionality, meter manufacturers are also compelled to provide the typical user with more straightforward solutions. Many meters available on the market today are capable of detecting disturbances that occur on the systems they monitor. The metered data typically used to characterize an event may include:
- time of the event,
- pickup of the alarm,
- dropout of the alarm,
- worst-case value,
- phase that the event occurred on, and/or
- waveform capture of the event.

This information, which is very important in determining the cause, severity, and source of an event, has been provided by many meters for years. In some instances, experienced users can evaluate the data and determine the source of a problem; but the typical user may not have this expertise.

The source of a disturbance may be determined as being "downstream" or "downline" (toward the electrical loads that utilize the electrical power) or "upstream" or "upline" (toward the source of electrical power itself). For a network, transmission system, or any other non-radial fed system, the supply of electric power may be ambiguous because of multiple sources or electrical paths. In those cases, "forward" and "reverse" may be used to describe relative direction of a disturbance source.

To determine the root cause of the disturbance, a consultant or experienced engineer might be hired to analyze and interpret data captured by the meter; however, it may be a slow (and expensive) process for the consultant or engineer to acquire the relevant information and come to the correct solution. It's easier (and less expensive) to troubleshoot a power quality problem when it occurs, rather than days or weeks later.

Benefits of this feature may include:
- Quickly and accurately determining the source of voltage sag/swells,
- Locating the source of voltage swells that takes place in the presence of voltage sags,
- Minimizing repetitive events by quickly locating disturbance sources, and
- Increasing production reliability and uptime.

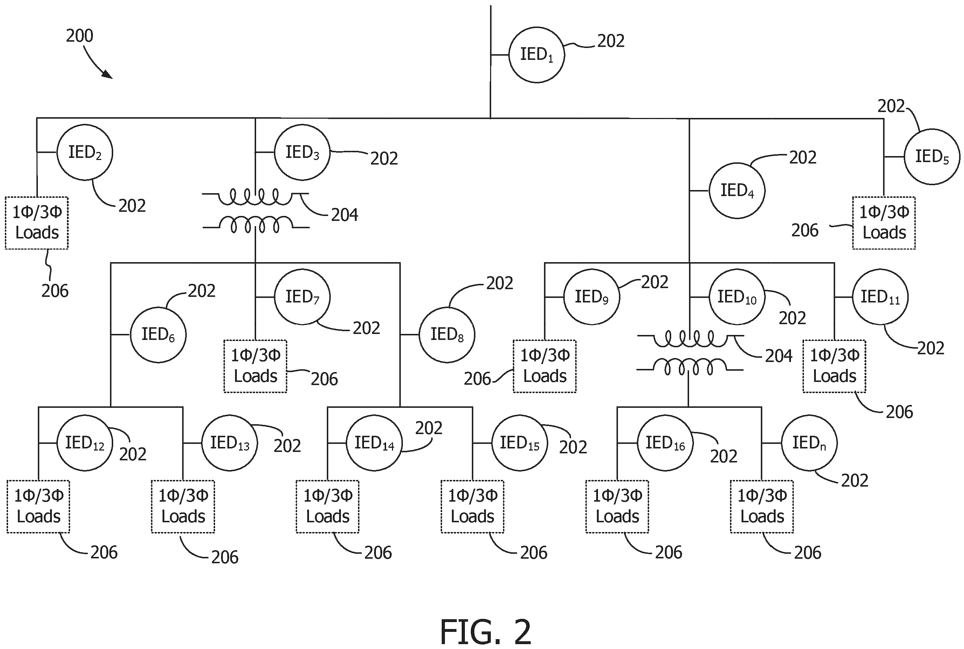

FIG. 2 illustrates another example electrical system 200 for which aspects of the present disclosure may be used to automatically assess voltage unbalance. One or more embodiments may optionally use location information of one or more IEDs 202 within the electrical system 200 to provide spatial context. For example, FIG. 2 illustrates system 200 that is radial-fed, includes two step-down transformers 204, and has multiple IEDs 202 monitoring a mix of single-phase and three-phase downstream loads 206. It is to be understood that the electrical system 200 of FIG. 2 is just one embodiment of many potential embodiments to teach the concepts described herein.

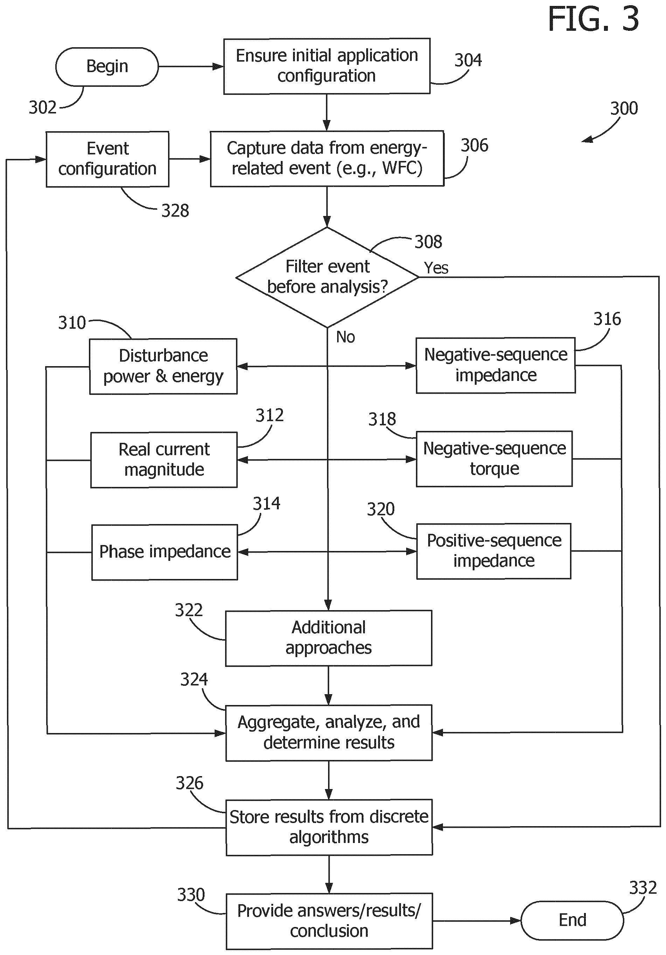

FIG. 3 illustrates an example process 300 embodying aspects of the present disclosure, which permits analysis of waveform capture data. The process 300 begins at 302 and proceeds to 304 for evaluating whether the algorithm, IED, and/or system are appropriately/properly configured for to perform this application. Configuration may occur or be required in at least one of the IED (e.g., meter, etc.), the edge software, cloud-based application, gateway, PLC, or any other relevant or necessary aspect of the EPMS (electric power management system). A few aspects that may require configuration include: device type(s), signal sample rate(s), load type(s), customer type(s), process type(s), alarm setting(s), logging interval(s), load(s) metadata (e.g., motor nameplate data, etc.), EPMS metadata, process(es), location(s), temporal context (e.g., timestamps, synchronization, etc.), feature(s), and so forth (this list is not exhaustive). In the event that one or more aspects of the algorithm, IED, and/or system have not been adequately configured, an indication may be provided to the end-user to address the issue, or alternatively, aspects of the present disclosure may be automatically configured or resolve the issue itself. One or more embodiments may optionally reassess the configuration to ensure there are no longer any configuration issues with the application.

Proceeding to 306, IEDs, such as conventional power metering devices, are often capable of acquiring a univariate, bivariate, or multivariate time-series of electrical signal data samples, such as current and/or voltage data samples, over a window of time. If the measured current and/or voltage signals exceed or drop below a predetermined threshold, some IEDs will automatically store the waveform data and generate a waveform capture, which provides a graphical representation of how the signal (e.g., a current and/or voltage signal) fluctuates or varies over time. The graphical representation of the signal captured may range from sub-cycle to numerous (even copious) cycles in duration, depending on the event's duration or by the memory limitation of the IED capturing the signal.

Waveform captures are typically generated by IEDs in response to unanticipated electrical events that cause variations in the voltage and/or current signals in an electrical system. The results of the unanticipated electrical events can be benign, but often lead to power-quality induced complications, including equipment damage, equipment failure, and safety concerns. The waveform capture data can be analyzed to diagnose the electrical event(s), enabling timelier resolution or mitigation of the power quality-induced issues.

The first step in the process 300 is to capture electrical signal waveform data from or associated with the electrical system being monitoring, assessed or analyzed. The electrical signal waveform data may include directly measured data (e.g., voltage, current, etc.), derived data (e.g., power, energy, etc.), and/or other external data (e.g., I/O, time, etc.). Additionally, metadata (e.g., location, load type, customer type, load characteristics, IED capabilities and limitations, etc.) may be appended to the captured electrical waveform data and optionally used as part of the analysis(es). Waveform data consists of a series of incremental time-series high-speed samples of the electrical signal that, when plotted on a time graph, embody a representation of the waveform of the electrical signal that was measured/captured.

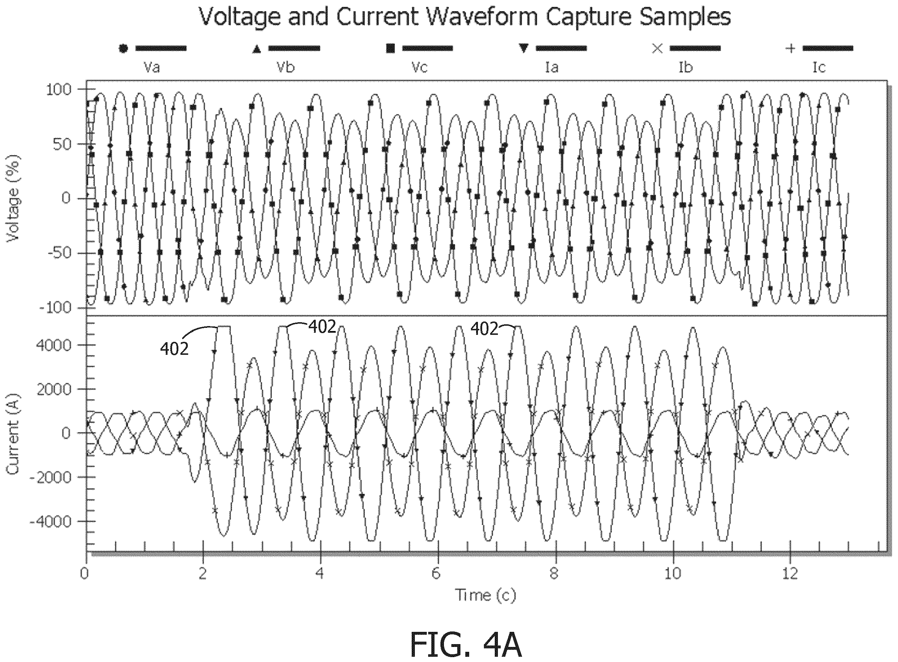

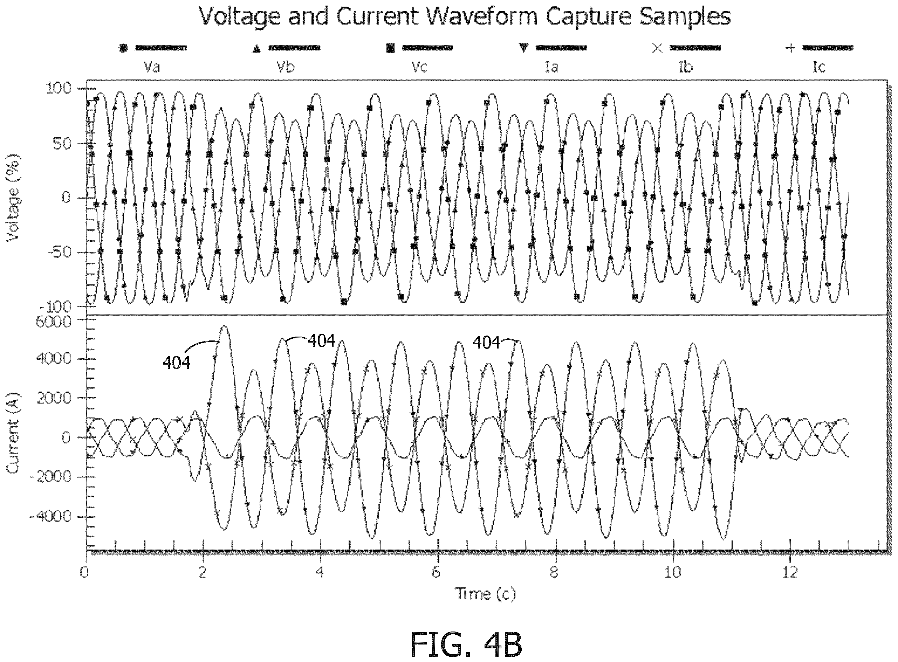

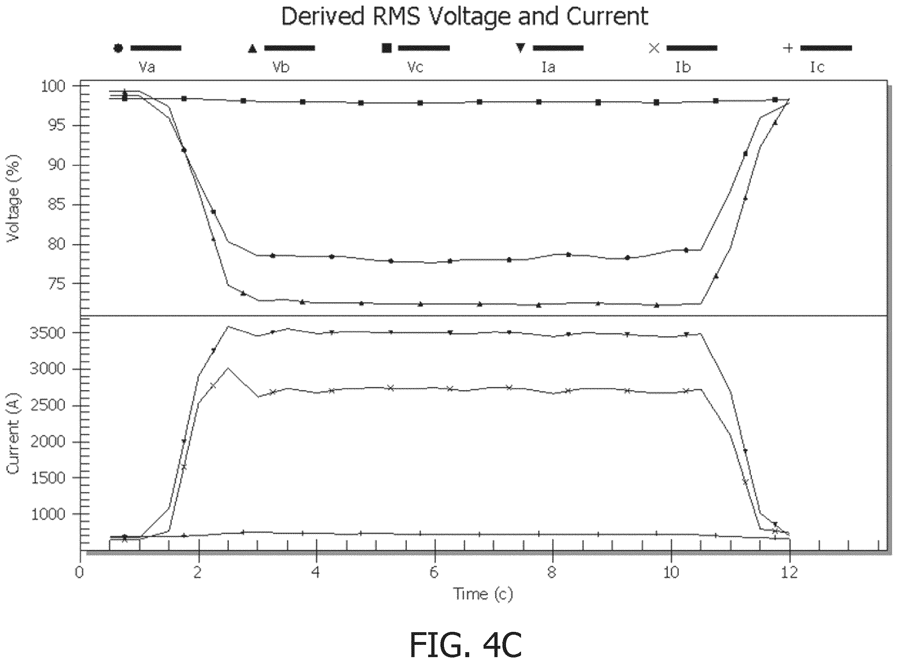

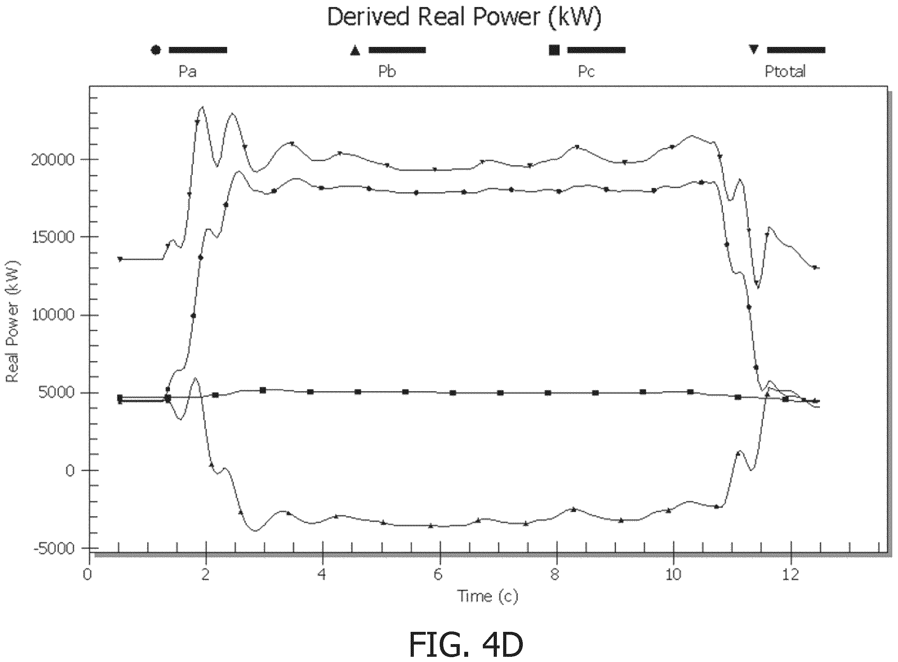

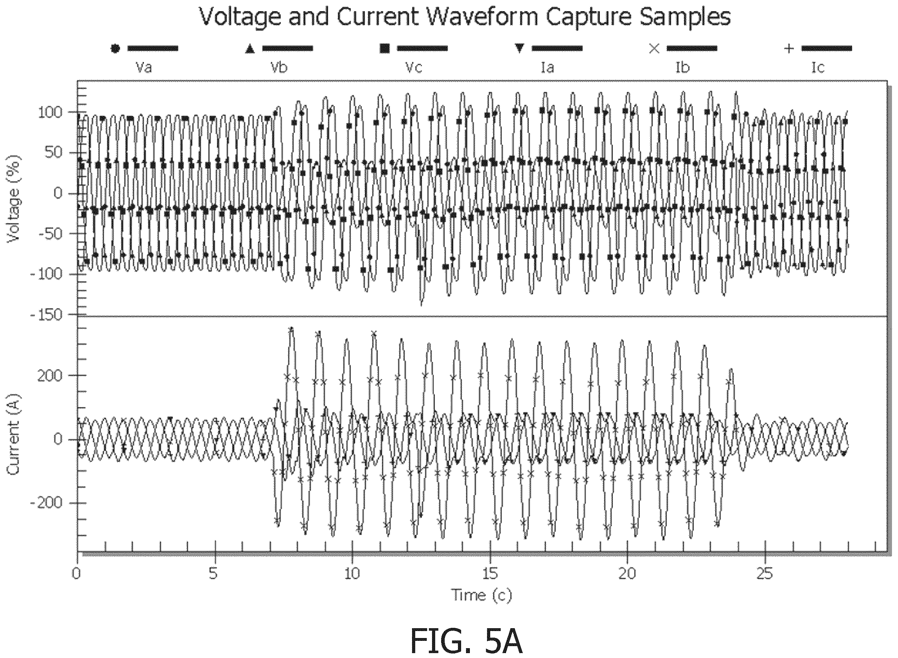

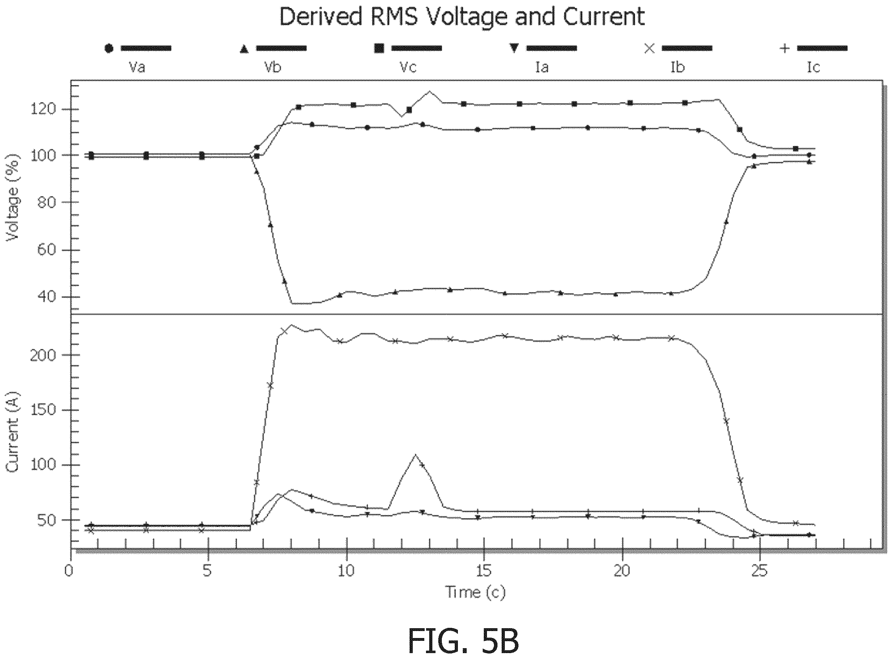

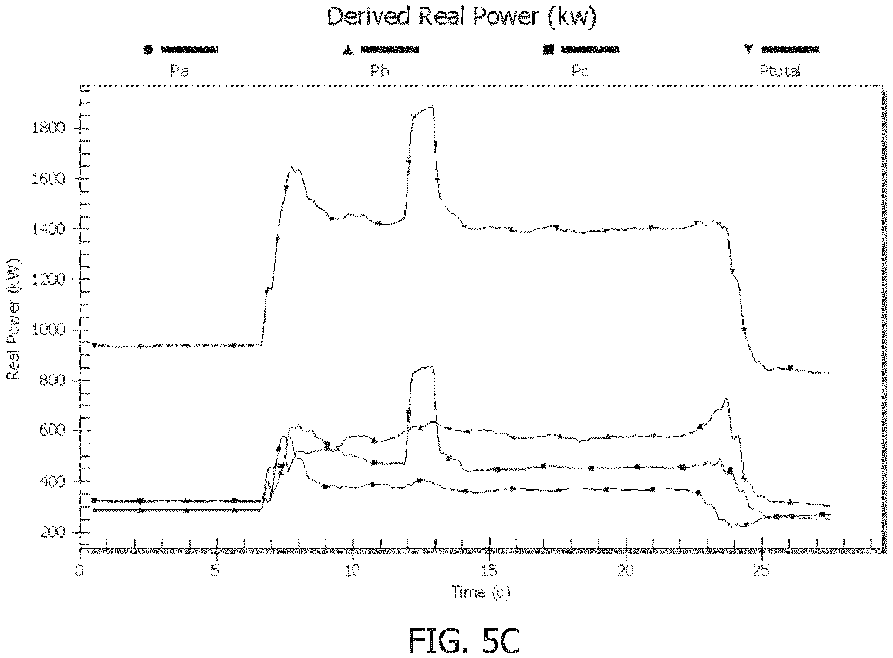

FIG. 4A represents an instantaneous waveform capture (WFC) of an electrical event, that is, the raw voltage and current signals captured by the IED. As described in greater detail below, FIG. 4B represents the signals of FIG. 4A after they have been preprocessed. FIG. 4C represents the rms values of this instantaneous electrical signal (i.e., derived from the instantaneous WFC) and FIG. 4D illustrates examples of derived three-phase real power values and total real power values. FIGS. 5A and 5B illustrate example waveform capture samples and corresponding derived rms values of the waveform capture samples, respectively, and FIG. 5C illustrates examples of derived three-phase real power values and total real power values, in accordance with embodiments of the disclosure. It is important to note that it is not necessary to plot the waveform data as a graph; the analysis of the waveform data may (and typically does) occur using the one or more phases and/or parameters of raw sampled signal data from the electrical event.

At 308, the process 300 filters the event before analysis. The digital representation of an analog electrical signal is limited by the digital-to-analog conversion process including all intervening hardware, algorithms, and other associated or related constraints. Any intentional, inadvertent and/or natural filtering between the original analog signal and the culminating digital waveform capture data will degrade (to some degree) the quality of the subsequent digital data, potentially impacting the veracity of any post-analysis(es) results.

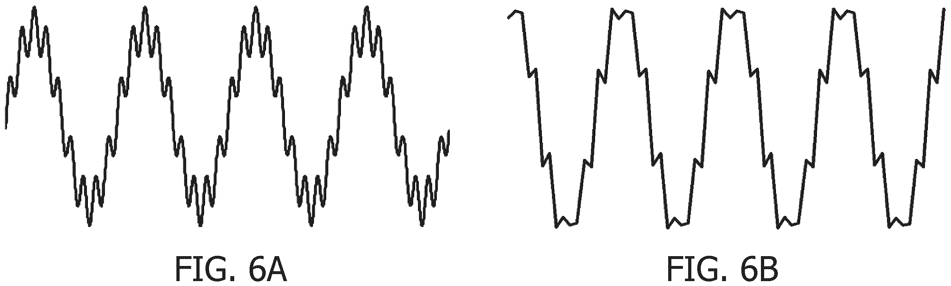

For example, the sample from the analog electrical signal is used to create the representative digital signal, and the sample rate of an IED is inversely proportional to the intersample interval (i.e., the gap between the samples). The sample rate is measured in Hertz (e.g., Hertz, kilohertz, megahertz, etc.) or in samples per cycle, and the intersample interval is measured in time (e.g., seconds, millisecond, microseconds, etc.). Because the intersample interval is the inverse of the sample rate in Hertz, reducing the sample rate results in a longer intersample interval. Decreasing the sample rate of an IED also has the unfortunate effect of neglecting (i.e., not measuring) more data between each sample. For example, FIGS. 6A and 6B show two exemplary digital waveform captures taken from the same analog event signal at two different sampling rates (e.g., 512 samples/cycle and 16 samples/cycle, respectively), which illustrates how lower sample rates can lose important details in the subsequent digital data. FIG. 6A shows the digital representation of an analog signal with a 9^{th} harmonic component present being sampled at 512 samples/cycle, and FIG. 6B shows the digital representation of the same analog signal with a 9th harmonic component present being sampled at 16 samples/cycle. As can be seen, the two digital waveform captures appear to be different, even though the input analog signal is the same. This affect is known as signal aliasing, and this example illustrates how lower sample rates (i.e., in this case, 16 samples/cycle) can lose important details in the subsequent conversion into digital data. Beyond the effect of aliasing shown in this example, other examples of limitations on converting analog signals to digital signals may include other IED hardware limitations (e.g., front-end filtering, etc.), instrument transformers limitations (e.g., inadequate bandwidth, etc.), power transformer limitation (e.g., filtering, configuration, etc.), and so forth.

The process 300 executes one or more analyses at 310, 312, 314, 316, 318, 320, and 322 for identifying candidate locations of the detected disturbance events. Preferably, these analyses execute simultaneously but they may also run sequentially or in parallel, in different orders, etc. The location detection algorithms could be run serially, for example, and the results processed together after the algorithms were run. In an embodiment, aspects of the present disclosure include "short-circuiting" the processing in the event of high confidence in a result, especially if basing the present analysis on previous data.

Referring to step 310, a "disturbance power & energy" method evaluates the difference between the total three-phase instantaneous power and the pre-event steady-state three-phase instantaneous power, which is defined as the "disturbance power" (DP). Integrating the disturbance power with respect to time represents "disturbance energy" (DE), which is the disturbance event's influence on the energy flow as measured by the IED. Because there will be an increase of energy that may flow toward the source of the disturbance, the disturbance source's location may be determined in an IED by using the disturbance energy flow's direction (i.e., upstream or downstream from the IED) as an indicator.

At 312, a "real current magnitude" method calculates the real current flow at an IED located on an electrical circuit with a disturbance event using the current magnitude and phase angles of voltage and current. The direction (i.e., upstream or downstream) of the disturbance event, with respect to the IED's location on the circuit, is determined by the direction of the current flow. If the real current flow is positive, then the disturbance event is considered to be downstream from the IED; if the real current flow is negative, then the disturbance event is considered to be upstream from the IED.

The process 300 includes at 314 a "phase impedance" method for evaluating: 1) a measured pre-event/pre-sag impedance magnitude against the measured event/sag impedance magnitude, and 2) an event/sag impedance phase angle. If the measured event/sag impedance magnitude is less than the pre-event/pre-sag impedance magnitude AND the event/sag impedance phase angle is greater than zero, the event/sag source location is downstream from the IED measuring the event. If these two requirements are not true, the event/sag source location is upstream from the IED measuring the event.

At 316, a "negative sequence impedance" method uses the negative-sequence voltage and current components to derive the negative-sequence impedance, which is used to determine the event/sag source location (i.e., downstream or upstream from the IED measuring the event). The derived negative-sequence impedance is compared to a fixed impedance threshold to determine whether the event/sag is downstream or upstream from the IED measuring the event. The threshold may be optimized by using a heuristic algorithm or an Al-based algorithm such as machine learning.

Proceeding to step 318, a "negative sequence torque" method uses the negative-sequence voltage and current components to derive the negative-sequence torque, which is used to then determine the event/sag source location (i.e., downstream or upstream from the IED measuring the event). The maximum torque angle (MTA) setting is used as part of this calculation, which may be optimized by using a heuristic algorithm or an Al-based algorithm such as machine learning.

A "positive sequence impedance" method at 320 derives the residual positive-sequence voltage by determining the difference between the measured pre-event/pre-sag positive-sequence voltage and the measured event/sag positive-sequence voltage. Likewise, the residual positive sequence current is determined from the difference between the measured pre-event/pre-sag positive-sequence current and the measured event/sag positive sequence current. The residual positive-sequence impedance is calculated by dividing the residual positive-sequence voltage by the residual positive-sequence current. The direction of the disturbance event is then determined by assessing in which quadrant the residual positive-sequence impedance is positioned: a downstream fault, for example, lies is positioned in the third quadrant (that is, between 180 and 270 degrees), and an upstream event's source or origin is positioned in the first quadrant (that is, between 0 and 90 degrees).

The process 300 executes additional approaches at 322. There are other useful technical approaches that may also be considered. For example, various analytics approaches such as machine learning (ML) may be successfully employed to determine whether the source of a sag/swell event (e.g., fault, load de-energization, etc.) is located upstream or downstream from the point where the IED is installed or measured/metered the sag/swell event. Machine learning focuses on the use of statistics-based algorithms to formalize and/or extend the data properties/characteristics of "specific cases" to newly captured data to facilitate performing analysis tasks without explicit instructions. The specific cases mentioned here are used to "teach" or "train" the ML algorithm, building an ML model that is used to consider and analyze new cases, accordingly. Building an effective (i.e., enough relevant data to produce successful and/or statistically valid results in most cases) database or library of tagged (i.e., previously, ascertained, assessed, and/or validated) waveform capture data is generally required to create a successful ML model, and thus, a successful ML application.

The ML approach may be improved by incorporating a feedback loop into the process. As new cases are analyzed, the end-user (or by some other means) may continue "tagging" waveform capture data. Over time, intentional and accurate assessments of sag and swell events by an external source (i.e., manually, some other algorithm, etc.) would continue updating and/or improving the ML algorithm/model as additional events are incorporated into the model.

While many electric utilities use similar equipment (e.g., reclosers, fuses, lightning arresters, etc.), energy consumers (i.e., energy customers or end-users) can employ an array of load types, depending on the business requirements and processes. Unique customer types (e.g., healthcare, data centers, office buildings, etc.) often require specific equipment (e.g., healthcare may use imaging equipment, etc.) or may use equipment in a certain way that generates a unique energy signature. Because specific electrical equipment is generally used within a specific customer type, some waveform event characteristics may also be more typical to specific customer types, especially downstream events.

For example, petrochemical customer types generally use large motors in their oil and gas operations to move a wide variety of fluids (e.g., oil, gas, water, slurries, etc.) via an array of pump types (e.g., centrifugal, positive displacement, diaphragm, transfer, etc.). When large motors start, they may produce an inrush current up to 6 to 10 times the rated full load amps, which can result in a significant voltage drop in the system (depending on the system impedance). These voltage drops can potentially impact other equipment connected to the same system and may also trigger a waveform capture (WFC) by the lED if the voltage sag is deep enough. If a WFC is triggered, the location will be determined to be downstream from the IED capturing the WFC because that is where the motor is located (i.e., the load is at the end of the circuit), and therefore, where the source of the event is. In this case, the contextual knowledge of the customer type and event characteristics (i.e., large inrush current with a motor energization profile, etc.) may be leveraged to provide a higher confidence that the source of the voltage event is downstream from the IED. Through this understanding, the ML approach may be further improved by incorporating known waveform characteristics associated with the specific customer and/or load types.

It is important to note that each analysis approach has its own limitations that should be considered when making a final determination of a disturbance event's source location or origin (i.e., upstream or downstream from the IED). For example, any one or more analysis technique(s) may produce "borderline" results that are inconclusive. In these cases, the confidence for that one or more analysis technique(s) will be lower than those with more conclusive results. Alternatively, general consensus across multiple analysis techniques should strengthen the conclusiveness and indicate a higher confidence in the results.

Due to the nature of each discrete approach/technique, its constraints may be unique and subject to a variety of conditions. Reasons for an increased uncertainty from a discrete approach/technique may include stringent configuration requirements, limitations due to fault types, misapplication(s), limitations of an approach/technique's range, instrument transformers used with specific IED(s), and so forth. For example, the disturbance power (DP) and the disturbance energy (DE) in the disturbance power and energy method (i.e., step 310) do not always agree (or may not agree between two or more IEDs), introducing uncertainty into the results. Alternatively, the phase impedance approach (i.e., step 314) is more ideally suited to single line-to-ground faults, while other methods may work better with symmetrical three-phase faults, for example.

Additionally, constraints associated with the measured data used to create the WFC can also produce uncertainties in the results. Lower sample rates of the IED performing the A/D conversion may lose or attenuate pertinent information (or even introduce misleading artifacts), ultimately generating substandard results. Even the instrument transformers (i.e., VTs and/or CTs) associated with the IEDs can filter out important data, reducing the result's veracity. The scale of an A/D converter may influence results; if the full scale of the A/D converter used for current is less than the magnitude of current experienced during a fault, then the current waveform may appear "flat" rather than sinusoidal (i.e., sometimes referred to as "flat topping"). In another example, saturated instrument transformers can produce what looks like a shark's dorsal fin, namely, curved on one side and flat on the other.

Alternatively, if the algorithm is based on small changes in current from one sample to the next, which may be in the range of milliamps, then a measurement optimized to handle the full peak of hundreds of amps may not be able to discern the small changes accurately. Impedance and power calculations will be impacted if the voltage and current samples were not recorded at the same time due to A/D limitations.

Referring now to step 324 of process 300, with so many approaches/techniques for evaluating WFCs, limitations and implications within these techniques, and constraints associated with converting the analog data into a digital representation, it is important to assess WFCs in a way that accounts for these possible influence factors. Because each approach/technique (if applicable) provides its own independent conclusions regarding the location (i.e., upstream or downstream) of the disturbance event's source or origin with respect to the associated IED performing the analysis, it is important to assess all the methods and provide the "best" (i.e., most probable) result selected from these candidate locations.

Just as there are many discrete approaches/techniques for assessing/evaluating the disturbance event's source location or origin (downstream or upstream), there are also a multitude of methods to amalgamate the results from these various discrete approaches/techniques into a "most probable" result. A short list of exemplary potential methods and respective descriptions are provided here:
- Simple aggregated balloting;
- Confidence-weighted balloting;
- Algorithm-weighted ballot;
- Algorithm and confidence weighting;
- Highest confidence;
- Best algorithm;
- Partial weighting with ML; and
- Dynamic weighting to ML.

In an embodiment, the simple aggregated balloting method aggregates the results produced from each discrete relevant approach/technique through a simple balloting process. In this method, the algorithm from each relevant approach independently determines the disturbance event's source location or origin (ignoring confidence). The results of these determinations are then evaluated and quantified (i.e., downstream vs. upstream), and the result that occurs most frequently (e.g., statistically, the highest modal score) is determined to be the final result/answer. If the majority of the results from the discrete algorithms are deemed to be inconclusive, then the final result/answer may be given as "inconclusive/undetermined."

In the event that confidences are calculated for the discrete relevant approaches/techniques (either qualitatively or quantitatively), a confidence-weighted balloting method according to an embodiment may use the confidences to provide a "weight" for a discrete relevant approach/technique accordingly. Once the weightings have been applied to the discrete relevant approaches/techniques, some applicable statistical approach may be used to aggregate the results from the discrete relevant approaches/techniques into a singular "most probable" result (i.e., downstream or upstream). The applicable statistical approach used to aggregate the weighted results may be performed using any valid or relevant statistical method, which may be understood by someone with ordinary skill in the art.

The algorithm-weighted ballot method in accordance with one or more embodiments may weight a discrete relevant approach/technique result based on at least one of the specific algorithms being used and/or the application (e.g., process, customer type, load type, etc.) associated with the event type being analyzed. As previously mentioned, some algorithms are more effective in some circumstances and this approach accounts for these conditions. The weightings associated with this approach/technique may be prescribed or learned over time based on historical results.

In an embodiment, an algorithm and confidence weighting method combines the two aforementioned methods to produce an aggregate confidence that includes both the confidence-weighted balloting (i.e., the confidence of each approach/technique's result) and the algorithm-weighted balloting (i.e., the confidence associated with each approach/technique's application). Again, different statistical or mathematical procedures may be used to combine the two confidences. For example, a simple multiplication of each respective confidence may be used (e.g., [confidence of the result x confidence of the algorithm = final confidence]). Other procedures for calculating a final result and confidence may be employed as well.

A highest confidence method according to an embodiment simply selects the result with the highest confidence from the results provided by the evaluated approaches/techniques. Additional steps would have to be taken in the event that two or more evaluated approaches/techniques with high respective confidences contradict each other.

As previously mentioned, some approaches/techniques are more suitable for certain applications, use cases, or event types. In accordance with one or more embodiments, a best algorithm method simply selects and recommends the result from the discrete approach/technique determination (if possible) that is best suited for the event type or characteristic(s), which consider all relevant associations, limitations, and implications.

In an embodiment, process 300 employs partial weighting with ML. As described with respect to step 322, ML is a viable approach for analyzing and determining event disturbance location sources. However, the end-user may not want to rely solely on the results from ML if there is some concern or uncertainty (e.g., insufficient training, etc.) associated with this approach. In this case, the ML model may be used to provide only a partial input (weighting) in determining the final result (i.e., downstream or upstream). The level of input (weighting) may be adjusted accordingly as necessary.

As the ML model is enhanced, enriched, and improved, its outcomes/results should also improve. In an embodiment, a dynamic weighting to ML method modifies/adapts the weighting given to the ML model over time to reflect and/or accommodate these improvements. The improvements and weightings may be statistically calculated, temporally adjusted, and/or manually altered/updated, based on some appropriate feedback.

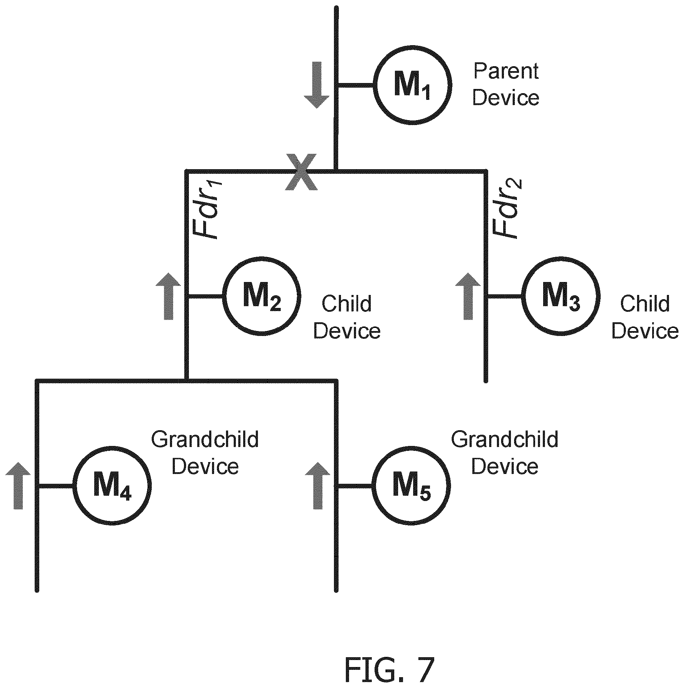

Referring now to FIG. 7, aspects of the present disclosure provide system evaluation and determination. The use of multiple IEDs to provide redundant analyses of the same event may be used to provide a higher confidence in the results as well. For example, FIG. 7 illustrates a simple radial-fed electrical system hierarchy that uses three IEDs: a parent IED (M₁), two child IEDs (M₂, M₃), and two grandchild IEDs (M₄, M₅). Each IED measures the relevant electric signals (e.g., voltage, current, etc.) at their discrete installation point within the electrical system, and each IED (M₁, M₂, M₃, M₄, M₅) employs algorithms for assessing the event to determine where the disturbance event's source location or origin is with respect to the electrical system. Assume that at some point in time a disturbance event occurs on the electrical system (e.g., a fault), causing a disruption in the downstream loads. After each discrete IED's algorithm processes the electrical signal data associated with the disturbance event, a result is provided from each discrete IED indicating whether the disturbance event's source location or origin is downstream or upstream from the respective IED. Within the hierarchical context of the electrical system, the results may then be analyzed to determine the disturbance event's source location or origin. In this case, the parent IED is indicating the source location is downstream while the two children IEDs and two grandchildren IEDs are indicating the source location is upstream. Therefore, hierarchical context indicates the disturbance event's source location or origin is likely located somewhere between the parent IED installation and the two children's installation points.

Aspects of this exemplary system allow for partial redundant analyses of the disturbance event's source location or origin, albeit not in every case. For example, all IEDs electrically connected to feeder 1 (Fdr₁) and below indicate agreement that the source location of the disturbance event is upstream (i.e., M₂, M₄, M₅). Having multiple IEDs in agreement increases the confidence in that conclusion. The parent IED (M₁) and child IED (M₃) also provide respective indications regarding the source location of the disturbance event; however, neither includes one or more additional IEDs to further corroborate that conclusion. This does not infer the overall conclusion is incorrect, just that the confidence in the conclusion may not be as compelling. As more IEDs that are able to assess the disturbance event's source location or origin are applied across the electrical system, it is generally possible to strengthen the overall conclusions regarding the disturbance event's source location or origin. To extend upon this concept, it may be possible to also aggregate individual levels of confidence at discrete IEDs with the augmented confidences leveraged by hierarchical relationships of two or more IEDs.

Those of ordinary skill in the art will recognize that there may be additional statistically relevant approaches that could be used to assess the disturbance event's source location or origin. The goals/purposes of the analyses described herein are to 1) provide more accurate and conclusive results, and to 2) reflect an accurate level of confidence associated with these results. The most rational results and justifiable confidences will likely be provided by assessing both the output of multiple algorithms and the hierarchical relationships between discrete IEDs, where applicable.

Referring again to FIG. 3, the process 300 stores information at 326. The stored information includes, but is not limited to, data, results, confidences, and/or any other information associated with the present disclosure may be stored, in part or whole, in one or more IEDs, on-site or off-site software systems, cloud-based systems, gateways, or some combination for future reference/benefits. Waveform capture data, pre-event data, post-event data, event parameters and/or characteristics (and other information associated with the present disclosure) may be stored (e.g., locally, remotely, and/or in the cloud). Stored information may be used to improve the algorithm (in part or whole) or the approaches/techniques used by the algorithm accordingly. For example, stored data, metadata, or other information could be used to improve the ML model. Likewise, an application may leverage updated customer types and/or load types to provide at least one of a better result or confidence calculation.

Proceeding to 328, the process 300 feeds back to an optional event configuration step for evaluating the results of the discrete approaches/techniques at the one or more IEDs, software systems, cloud-based applications, gateways, etc. to initialize, improve, or optimize one or more settings or configurations. If the relevant data is measured and available (e.g., from storage, etc.), changes to the settings or configurations may be performed at any time and the analyses may be performed after the fact. For example, assume waveform capture data from disturbance events have been measured and saved from a multitude of IEDs and the disturbance event's source location or origin has been determined at each discrete location. At a later time, metadata is specified that provides hierarchical relationships between each discrete IED. This subsequent metadata (i.e., knowledge of the hierarchical relationships) may be used to provide more accurate and conclusive results, and to improve the confidence level associated with the results (as described above in the System Evaluation and Determination description). Alternatively, changes to an IED's sample rate configuration after the fact cannot be used to improve the previous assessments or results of discrete approaches/techniques because data that was uncaptured/unmeasured/unsampled is unrecoverable (i.e., lost).

In all cases, improvements to the event configuration (i.e., in IEDs, software, cloud-based application, gateways, etc.) are useful for optimizing the feature and improving the data and/or subsequent results immediately after the changes/updated configurations are made.

Configuration of programming embodying features of the present disclosure (i.e., in the device, gateway, software, and/or cloud-based application) preferably includes any parameter to be evaluated (e.g., voltage, current, real power, apparent power, reactive power, etc., or multiple combinations thereof, for example). The configured data to be analyzed may also include a periodic data sample rate (i.e., acquisition rate, logging interval, etc.) with an associated timestamp. The acquisition of data may be time-based (e.g., periodic), process-based (e.g., while certain equipment or processes are operating), arbitrary (e.g., random or aperiodic), and/or some combination thereof, for example. The sample/measurement rate of the data in an embodiment may be anywhere from one cycle to a year or longer (e.g., cycles, seconds, minutes, hours, days, weeks, months, seasons, years, etc.), but is optimally in minutes, hours, or daily. It is to be understood that a measurement campaign could be up to a year, but a preferred sampling rate is typically at least daily. For example, systems are often configured to capture current values every 5 minutes, to capture apparent power every 15 minutes, or to capture a minimum, average, and maximum rms voltage every 10 minutes. Samples/measurements of the data may also occur at designated times within a process when specific equipment is operating.

The process 300 of FIG. 3 provides results/answers at 330. In response to the occurrence of a disturbance event, the end-user(s) may be provided with recommendations for mitigating disturbance events. Recommendations may be provided to the end-user(s) via at least one of a text, an email, a report, an alarm, an audible communication, a communication on an interface of a screen/display, or any other form of interaction or communication. The recommendations may advise an end-user to install one or more sag/dip mitigation technique(s) to mitigate the disturbance events, for example. Sag/dip mitigation technique(s) may include at least one of: dynamic voltage restorer (DVR), uninterruptible power supply (USP), constant voltage transformer (CVT), reduced voltage starter, static switch, system design augmentation(s), for example. In an embodiment, the process 300 takes at least one action at 330 to address the at least one disturbance event. It is understood that the above-listed example recommendations and actions are but a few of many possible recommendations and actions, as will be apparent to one of ordinary skill in the art.

There are various types of data, results and recommendations that may be shared with the end-user upon completion of at least one disturbance event assessment. A few data/results/information/recommendations that may be included are:
- Voltage sag/dip magnitude(s)
- Various statistical analyses
- Voltage sag/dip type(s)
- Confidence(s)
- Voltage sag/dip direction(s)
- Fault current(s)
- Voltage sag/dip location(s)
- Duration(s)
- Voltage sag/dip impact(s)
- Historical analyses and trend(s)
- Voltage sag/dip affected phases(s)
- Tracking and Recovery time(s)
- Voltage sag cause(s)
- Recommendation(s)
- Configuration suggestion(s)
- Mitigation suggestion(s)
- Mitigation location(s)

Again, it is important to note that the list above provides only a few possible types of outputs associated with disturbance events and is not an exhaustive list as would be understood by those with ordinary skill in the art.

The process 300 ends at 332. In some embodiment, process 300 may return to step 302 and repeat again automatically or in response to user input and/or a control signal, for example.

Again, it is important to note that there are always limitations when converting an analog signal to a representative digital signal. Analog-to-digital conversion processes are lossy, and (depending on the characteristics of the signal) may produce errors, limitations or artifacts in one or more of the aforementioned algorithms and/or assessments. These errors or limitations may be introduced externally by associated instrument transformers or other intervening components, or internally by an IED's front-end, signal processing issues within the IED (e.g., undersampling, aliasing, anti-aliasing applications, etc.) or elsewhere. Aspects of the present disclosure attempt to limit the influence of some of these issues so that the quality of the signal's digital representation is suitable, and the validity of its results are incontrovertible.

For example, high-speed electrical events generally contain high-frequency spectral content. If the instrument transformers are incapable of passing this content through to the IED or if the IED's sample rate is insufficient of adequately sampling the high-frequency components of the electrical signal, the digital representation of the analog signal may be unsatisfactory. In this case, assessment of the digital signal may produce inaccurate results that lead to misinterpretations, flawed decisions, and unexpected repercussions.

For this reason, the quality of the digital signal representation is an important factor in assessing an event. Bandwidth limitations of instrument transformers and/or IEDs should be considered and accounted for. Unintentional instrument transformer filtering or insufficient IED sample rates, for example, may directly influence the digital signal's quality and resulting conclusions. One or more embodiments may place limitations on the brevity/shortness of electrical events that may be analyzed/assessed due to the potential reduction in the digital signal's quality and frequency content at high speeds. Data and/or results from a given IED (or IED using a given CT or VT/PT set) may be suppressed accordingly, depending on their specific sample rates, aliasing attributes, lack of anti-aliasing, bandwidth or other characteristics. Additionally, the event characteristics may also be used to determine the quality and/or validity of an assessment originating from any one or more IEDs.

Because each electrical system, event, IED characteristics and features, instrument transformers, etc. and loads are unique, there are nuanced limitations or particular constraints associated with how a system or algorithm responds to distinct event(s) as discussed above. For example, it is possible that one algorithm or IED may perform better under certain conditions than another. Evaluating an event(s) or issue(s) from various locations dispersed at different points within the electrical system is useful for many reasons, including: 1) helping to locate the issue's source or origin (i.e., upstream or downstream from the IED), 2) helping to quantify the severity of the issue, and 3) providing redundant assessments of the event(s) or issue from a different "point-of-view."

This third reason is important because it improves the level of confidence in the results and/or determinations by one or more of the algorithms discussed above. For example, consider a first IED that evaluates a voltage sag event, indicating the disturbance event's source or origin is downstream from said IED. Additionally, a second IED that is located higher in the electrical system hierarchy may evaluate the same voltage sag event, also indicating the disturbance event's source or origin is located downstream from the second IED. Having both the first IED and second IED give comparable results provides a more persuasive conclusion that the source or origin of the voltage sag is indeed downstream from the first IED.

Determining a "confidence level" may be performed in many ways. For example, a simple statistical approach may be to evaluate the results from each independent IED and combine them accordingly. In the example above, two independent IEDs concurred that a voltage sag event's source or origin was downstream from a first IED that is lower in the electrical hierarchy (based on where within the electrical hierarchy the data was being measured/captured). The two results from the first and second IEDs are congruent with each other, so the level of confidence in their conclusions is higher than just relying on the results from a single IED. It is also possible to weight the first IED more heavily than the second IED, for example. In one implementation, the algorithm, assessment, or data used in the first IED may be considered as more valid, applicable, or of a higher quality by experts in the field. As such, the first IED may be more heavily weighted by experts during configuration/setup or during its analysis(es)/assessments. In another implementation, consider a first IED that is twice as likely to be correct than a second IED (perhaps because it is a higher quality or more capable IED). In the event the results from both systems are in conflict (i.e., the first IED indicates the voltage sag's source as being downstream and the second IED indicates the voltage sag's source as being upstream), the first IED's conclusions would be used because it has a higher probability of being correct than the results from the second IED. There are many statistical and mathematical methods and techniques for combining the outcomes from different systems, which someone with ordinary skill in the art may understand or consider.

### Example 1: Phase-to-Phase Fault

Referring again to FIGS. 4A to 4D, in this example, several waveforms (measured and derived) are provided to illustrate aspects of the present disclosure. FIG. 4A illustrates both the measured instantaneous three-phase voltages (upper waveforms) and measured instantaneous three-phase currents (lower waveforms), respectively. FIG. 4B illustrates the preprocessed instantaneous three-phase voltages and preprocessed instantaneous three-phase currents from the waveforms provided in FIG. 4A. FIG. 4C illustratates rms values by phase, derived from their corresponding instantaneous waveforms as shown in FIG. 4B. FIG. 4D illustrates real power values, derived from the corresponding preprocessed instantaneous waveforms as shown in FIG. 4B. FIG. 4D also illustrates derived total real power values, which are a sample-by-sample sum of the three individual phases of the real power values shown in FIG. 4D. It should be noted here that while the examples provided herein describe three-phase systems, aspects of the present disclosure may be applied to any system with one or more phases (e.g., single-phase, two-phase, three-phase, etc.).

The voltage waveforms shown in FIG. 4A indicate the exemplary event causes two phases (i.e., phases Vₐ and V_{b}) to experience a voltage sag while the third phase voltage (i.e., V_{c}) stays relatively constant in magnitude and phase. Additionally, the current waveforms shown in FIG. 4A indicate the currents associated with the affected phase voltages (i.e., Iₐ and I_{b}) also experience significant deviations from their steady-state/pre-event characteristics. In the illustrated embodiment, the currents Iₐ and I_{b} more than double in magnitude, while the third phase current (i.e., I_{c}) remains relatively constant in magnitude and phase.

Preprocessing of at least one of the three-phase voltage and current signals may be beneficial or even necessary to improve data quality and/or signal quality so that the best results and/or conclusions are provided. For example, it is possible for:
- the phase conductors to be swapped with each other,
- the phase conductors to be misconnected,
- the polarity of one or more conductors (voltage and/or current) to be inverted at the IED,
- the incorrect transducer ratios applied in the IEDs,
- and so forth.

Resolving and/or correcting any one or more of these issues before the evaluation is performed will, in most cases, minimize errors, provide better analysis(es), and improve the accuracy in determining the disturbance event's location or origin.

For example, the three-phase voltage and current waveforms shown in FIG 4B are a derivation of those shown in FIG. 4A. In FIG. 4A, as indicated at 402, the first, second, and sixth cycles of the phase A current (i.e., Iₐ) during the event are flattened or "clipped" at their peaks, which is caused by limitations in the IED's analog-to-digital conversion process. The affected one or more waveforms shown in FIG. 4A are preprocessed (i.e., prior to the fault analysis) to reduce the effects of the clipping (i.e., "de-clipped"), as indicated at 404, which improves the results and reliability of the fault analysis algorithms. This preprocessing provides more accurate waveform data, leading to a better representation in the waveform graphs.

The rms values of the voltages and current of this event shown in FIG. 4C provide the waveform capture information from FIG. 4B in a format that is somewhat easier to quantify. For example, the graph indicates V_{b} sags to nearly 72% of the nominal and Vₐ sags to nearly 78% of the nominal. In this case, if the nominal voltage is 480 volts, Vₐ and V_{b} sag to about 374 volts and 346 volts, respectively. This reduction in voltage can easily result in connected electrical equipment (including critical equipment) de-energizing due to insufficient voltage levels. The rms current levels shown in FIG. 4C are also indicative of significant deviations from their nominal steady-state levels. In this case, the graph indicates Iₐ increases by approximately 500% and I_{b} increases by approximately 425%, respectively. The duration of the event, based on the values shown in FIG. 4C, is about 11 seconds.

FIG. 4D illustrates the derived three-phase real power values and total real power values during the voltage sag event. As shown, the Phase A real power values and Phase B real power values (i.e., Pₐ and P_{b}) exhibit significant deviations during the voltage sag event while the Phase C real power values (i.e., P_{c}) remains relatively constant. In fact, Pₐ and P_{b} are approximately mirrored images of each other, indicating the event was a phase-to-phase fault between Phase A and Phase B (i.e., Pₐ and P_{b}).

Referring again to step 310 of FIG. 3, the disturbance power & energy algorithm evaluates the difference between the total three-phase power values during the event and the total three-phase power values before the event (i.e., pre-event) to determine the disturbance power (DP). To help set up the calculation, it is important to note (as will be clear for someone with ordinary skill in the art) that the total power value (i.e., Pₜₒₜₐₗ) is given by the sum of the real phase power values (i.e., Pₜₒₜₐₗ = Pₐ + P_{b} + P_{c}). For example, at time = 2 cycles on the graph shown in FIG. 4D, Pₐ is approximately equal to 15 MW, P_{b} is approximately equal to 3 MW, and P_{c} is approximately equal to 5 MW. Because the total real power value (Pₜₒₜₐₗ) is equal to the sum of the individual phases at that point in time (i.e., time = 2 cycles), the total real power value is approximately equal to 15MW + 3 MW + 5 MW, or about 23 MW. It is important to further note that the term "approximately" is used here because the values are only visually estimated in the present example. It is to be understood the values of the summation of Pₐ, P_{b}, and P_{c} can be determined with precision as can the result (i.e., Pₜₒₜₐₗ).

A simple assessment of the disturbance source's location or origin of this event using disturbance power and energy algorithm would be to evaluate the total real power values (P_{total pre-event}) relative to the total real power values (P_{total event}) as demonstrated in the example above. Assuming the IED is configured to indicate a positive energy flow from the source to the load, the total real power values during the event shown in FIG. 4D (i.e., P_{total event}) increases to almost twice the magnitude of the total real power values before the event (P_{total pre-event}); that is, from aproximately 13.5 MW to approximately 23 MW. This indicates the source or origin of the disturbance is located downstream from the IED measuring the data. Another one or more algorithms may also be used to determine the disburance event's source or location, and the balloting aspects of the present disclosure would be executed accordingly.

### Example 2: Phase-to-Ground Fault

Referring again to FIGS. 5A to 5C, in this example, a second type of disturbance event is similarly analyzed, and again, several waveforms (measured and derived) are provided to illustrate aspects of the invention. FIG. 5A illustrates both the measured instantaneous three-phase voltages (upper waveforms) and instantaneous three-phase currents (lower waveforms), respectively. FIG. 5B illustratates the rms values by phase, derived from their corresponding instantaneous waveforms as shown in FIG. 5A. FIG. 5C illustrates three individual phases of real power values, derived from the corresponding instantaneous waveforms as shown in FIG. 5A. FIG. 5C also illustrates a fourth set of values (i.e., derived total real power values), which is a sample-by-sample sum of the three individual phases of the real power values shown in FIG. 5C.

The voltage waveforms shown in FIG. 5A indicate the event causes the magnitude of two voltage phases (i.e., phases Vₐ and V_{c}) to experience a swell while the magnitude of the third voltage phase (i.e., V_{b}) exhibits a significant voltage sag. Additionally, the current waveforms shown in FIG. 5A indicate the currents associated with the "swelling" phase voltages (i.e., Iₐ and I_{c}) remain somewhat constant from their steady-state/pre-event characteristics; however, the third phase current (i.e., I_{b}) more than doubles in magnitude during the event.

The rms values of the voltages and currents of this event shown in FIG. 5B provide the waveform capture information from FIG. 5A in a format that may be somewhat easier to quantify and analyze. For example, the graph indicates V_{b} sags to nearly 35% of the nominal, Vₐ swells to nearly 115% of the nominal, and V_{c} swells to nearly 127% of the nominal, respectively. In this case, if the nominal voltage is 480 volts, Vₐ swells to about 552 volts, Vb sags to about 168 volts, and V_{c} swells to about 610 volts, respectively. These variations (sags and swells) in the phase voltages can easily result in connected electrical equipment (including critical equipment) de-energizing due to brief (i.e., in the order of cycles) overvoltage and undervoltage conditions. The rms current levels shown in FIG. 5B also indicate significant deviations from their nominal steady-state magnitudes. In this case, the graph indicates Iₐ increases by about 170%, I_{b} increases by about 510%, and I_{c} increases by approximately 260%, respectively. The duration of the event, based on the values shown in FIG. 5B, is about 17 seconds.

Again, FIG. 5C illustrates the derived three-phase real power values and derived total real power values during the voltage sag event. As shown, all three phases (i.e., Pₐ, P_{b} and P_{c}) exhibit significant increases in their power flow values with P_{c} increasing almost 300% from its pre-event power magnitude.

Referring again to step 310 of FIG. 3, the disturbance power & energy algorithm evaluates the difference between the total three-phase power values during the event and the total three-phase power values before the event (i.e., pre-event) to determine the disturbance power (DP). A simple assessment of the disturbance source's location or origin of this event using the disturbance power & energy algorithm would be to evaluate the total real power (P_{total pre-event}) relative to the total real power (P_{total event}). Again, assuming the IED is configured to indicate a positive energy flow from the source to the load, the total real power values during the event shown in FIG. 5C (i.e., P_{total event}) increase to more than twice the magnitude of the total real power values before the event (P_{total pre-event}); that is, from aproximately 950 kW to approximately 1.9 MW. This indicates the source or origin of the disturbance is again located downstream from the IED measuring the data. Another one or more algorithms may also be subsequently used to determine the disburance event's source or location, and the balloting aspects of the present disclosure would be executed accordingly.

In an embodiment, a method for improving fault or disturbance location detection includes capturing energy-related data in an electrical system using at least one IED, analyzing the energy-related data to identify fault or disturbance events in the electrical system and, in response to identifying at least one fault or disturbance event, selecting and simultaneously applying a plurality of fault or disturbance location detection algorithms to the energy-related data to independently ascertain location(s) of the at least one fault or disturbance. In addition, the method of this embodiment comprises compiling outputs of the plurality of fault or disturbance location detection algorithms. The outputs include the independently ascertained location(s) of the at least one fault or disturbance and a weighted ballot is applied to each of the outputs. The method also includes determining and providing an indication of location(s) of the at least one fault or disturbance based on an analysis of the compiled outputs.

Aspects of the present disclosure optionally use one or more digital or analog I/O signals to more optimally function. For example, one or more embodiments optionally use a digital status input signal from at least one single-phase or three-phase load (e.g., a polyphase induction motor) to simplify processing and/or enhancing its analysis(es), assessment(s), result(s) and/or recommendation(s). Alternatively, one or more embodiments may use an analog I/O signal from a load(s) (e.g., a polyphase induction motor) to incorporate measured temperatures (i.e., from thermocouple(s)) into its analysis(es), assessment(s), result(s), and/or recommendation(s). I/O signals may be produced or used by at least one of the IEDs, gateways, software systems, cloud-based systems or other applications as necessary. I/O data may be used to indicate a load(s) energizing or de-energizing that may create a disturbance event. If the location of these load(s) are known and the disturbance event directly correlates with their energizing or de-energizing, this information may be used to help determine whether the disturbance event's source or origin is upstream or downstream of one or more IEDs.

It is to be understood that an input is data that a processor and/or IED receives, and an output is data that a processor and/or IED sends. Inputs and outputs may either be digital or analog. The digital and analog signals may be both discrete variables (e.g., two states such as high/low, one/zero, on/off, etc. If digital, this may be a value. If analog, the presence of a voltage/current may be considered by the system/IED as an equivalent signal) or continuous variables (e.g., continuously variable such as spatial position, temperature, pressure voltage, etc.). They may be digital signals (e.g., measurements in an IED coming from a sensor producing digital information/values) and/or analog signals (e.g., measurements in an IED coming from a sensor producing analog information/values). These digital and/or analog signals may include any processing step within the IED (e.g., derive an active power (kW), power factor, a magnitude, a relative phase angle, among all the derived calculations).

Processors and/or IEDs may convert/reconvert digital and analog input signals to a digital representation for internal processing. Processors and/or IEDs may also be used to convert/reconvert internally processed digital signals to digital and/or analog output signals to provide some indication, action, or other response (such as an input for another processor/IED). Typical uses of digital outputs may include signaling relays to open or close breakers or switches, signaling relays to start or stop motors and/or other equipment, and operating other devices and equipment that are able to directly interface with digital signals. Digital inputs are often used to determine the operational status/position of equipment (e.g., is a breaker open or closed, etc.) or read an input synchronous signal from a utility pulsed output. Analog outputs may be used to provide variable control of valves, motors, heaters, or other loads/processes in energy management systems. Finally, analog inputs may be used to gather variable operational data and/or in proportional control schemes.

A few more examples where digital and analog I/O data are leveraged may include (but not be limited to): turbine controls, plating equipment, fermenting equipment, chemical processing equipment, telecommunications, equipment, precision scaling equipment, elevators and moving sidewalks, compression equipment, waste water treatment equipment, sorting and handling equipment, plating equipment temperature/pressure data logging, electrical generation/transmission/distribution, robotics, alarm monitoring and control equipment, as a few examples.

The above-discussed method (and/or other systems and/or methods discussed herein) may include one or more of the following features either individually or in combination with other features in some embodiments. For example, in some embodiments the energy-related signals captured by the at least one IED may include at least one of: a voltage signal, a current signal, an input/output (I/O) data, and a derived energy-related value. In some embodiments, the I/O data includes at least one of on/off status(es), open/closed status(es), high/low status(es), temperature(s), pressure(s), and volume(s). Additionally, in some embodiments the derived energy-related value includes at least one of: a calculated, computed, estimated, derived, developed, interpolated, extrapolated, evaluated, and otherwise determined additional energy-related value from the at least one of the voltage signal and/or the current signal. In some embodiments, the derived energy-related value includes at least one of: active power, apparent power, reactive power, energy, harmonic distortion, power factor, magnitude/direction of harmonic power(s), harmonic voltage(s), harmonic current(s), interharmonic current(s), interharmonic voltage(s), magnitude/direction of interharmonic power(s), magnitude/direction of subharmonic power(s), individual phase currents, phase angle(s), impedance(s), sequence component(s), total voltage harmonic distortion, total current harmonic distortion, three-phase current(s), phase voltage(s), line voltage(s) and/or other similar/related parameters. In some embodiments, the derived energy-related value includes at least one energy-related characteristic, the energy-related characteristic including magnitude, direction, phase angle, percentage, ratio, level, duration, associated frequency components, impedance, energy-related parameter shape, and/or decay rate. It is understood that the energy-related signals may include (or leverage) substantially any electrical parameter derived from at least one of the voltage and current signals (including the voltages and currents themselves), including, for example, load levels and patterns, as will be understood from further discussions below.

In some embodiments, the above-discussed method (and/or other system(s) and/or method(s) discussed herein) may be implemented on the at least one IED called for in the above-discussed method (and/or other systems and/or methods discussed herein). Additionally, in some embodiments the above-discussed method (and/or other systems and/or methods discussed herein) may be implemented partially or fully remote from the at least one IED, for example, in a gateway, on-site software, edge software, a remote server, etc. (which may collectively or alternatively be referred to herein as a "head-end" system). It is to be understood that "cloud-based software," "edge software," "edge system," "management system," "software management system," etc. may collectively or alternatively be referred to herein as "head-end software" generally (for the purposes of this application). In some embodiments, the at least one IED may be coupled to measure energy-related signals, receive electrical measurement data from or derived from the energy-related signals at an input, and configured to generate at least one or more outputs. The outputs may be used to identify the at least one potential load type associated with the characterized and/or quantified at least one identified variation/change in the electrical system. Examples of the at least one IED may include a smart utility meter, a power quality meter, and/or another measurement device (or devices). The at least one IED may include breakers, relays, power quality correction devices, uninterruptible power supplies (UPSs), filters, and/or variable speed drives (VSDs), for example. Additionally, the at least one IED may include at least one virtual (e.g., residual energy-related signal measurement, calculation, or derivation) meter in some embodiments.

In some embodiments, the energy-related signals may be continuously or semi-continuously captured and/or logged by the at least one IED, and variation(s)/change(s) identified in the energy-related signals may be updated (e.g., evaluated/re-evaluated, prioritized/re-prioritized, tracked, etc.) in response thereto. For example, variation(s)/change(s) may initially be identified from energy-related signals captured at a first time, and may be updated or revised in response to (e.g., to include or incorporate) variation(s)/change(s) identified from energy-related signals captured at a second time. As variation(s)/change(s) are identified, the variation(s)/change(s) may be characterized and/or quantified, information related to the characterized and/or quantified identified variation(s)/change(s) may be appended to time-series information associated with energy-related data, and characteristics and/or quantities associated with the time-series information may be evaluated to identify at least one potential load type associated with the characterized and/or quantified identified variation(s)/change(s), for example. The appended information may include, for example, tagged indications on the time-series information, metadata, characteristics and/or other information related to the characterized and/or quantified identified variation(s)/change(s).

As used herein, the terms "upline" and "downline" (also sometimes referred to as "upstream" and "downstream ", respectively) are used to refer to electrical locations within an electrical system. More particularly, the electrical locations "upline" and "downline" are relative to an electrical location of an IED collecting data and providing this information. For example, in an electrical system including a plurality of IEDs, one or more IEDs may be positioned (or installed) at an electrical location that is upline relative to one or more other IEDs in the electrical system, and the one or more IEDs may be positioned (or installed) at an electrical location that is downline relative to one or more further IEDs in the electrical system. A first IED or load that is positioned on an electrical circuit upline from a second IED or load may, for example, be positioned electrically closer to an input or source of the electrical system (e.g., an electrical generator or a utility feed) than the second IED or load. Conversely, a first IED or load that is positioned on an electrical circuit downline from a second IED or load may be positioned electrically closer to an end or terminus of the electrical system than the other IED (so in this case, it will be closer to a load or group of loads).

A first IED or load that is electrically connected in parallel (e.g., on an electrical circuit) with a second IED or load may be considered to be "electrically" upline from said second IED or load in embodiments, and vice versa. In embodiments, algorithm(s) used for determining a direction of a power quality event (i.e., upline or downline) is/are located (or stored) in the IED, cloud, on-site software, gateway, etc. As one example, the IED can record an electrical event's voltage and current phase information (e.g., by sampling the respective signals) and communicatively transmit this information to a cloud-based system. The cloud-based system may then analyze the voltage and current phase information (e.g., instantaneous, root-mean-square (rms), waveforms and/or other electrical characteristic) to determine if the source/origin of an energy-related transient (or other energy-related event) is electrically upline or downline from where the IED is electrically coupled to the electrical system (or network).

In some embodiments, the energy-related data from or derived from the energy-related signals captured by the at least one IED is processed on at least one of: the IED, the cloud-based system, the on-site or edge software, the gateway, and the other head-end system associated with the electrical system. In these embodiments, for example, the at least one IED may be communicatively coupled to the at least one of: the cloud-based system, the on-site or edge software, the gateway, and any other head-end system on which the electrical measurement data is processed, analyzed, and/or displayed.

In some embodiments, data associated with the energy-related data is stored (e.g., in a memory device of at least one device or system associated with the electrical system) and/or tracked over a predetermined time period. The predetermined time period may be a user-configured time period, for example. In some embodiments, the stored and/or tracked data includes information associated with identifying the at least one potential load type. The information associated with identifying the at least one potential load type may include, for example, at least one of: the at least one identified variation/change, the characterized and/or quantified at least one identified variation/change, the time-series information, and the evaluated characteristics and/or quantities associated with the time-series information. In some embodiments, the information associated with identifying the at least one potential load type may be saved and/or tracked for future analyses/uses. For example, the stored and/or tracked information may be used to generate a library of load types and associated start/run/change/stop characteristics and/or be added to a pre-existing library of load types and associated start/run/change/stop characteristics. In embodiments in which there is a pre-existing library of load types and associated start/run/change/stop characteristics, the at least one potential load type identified using the systems and methods described herein may be selected from a plurality of potential loads types in the pre-existing library of load types and associated start/run/change/stop characteristics.

In some embodiments, the above-described system may correspond to a control system (e.g., the previously discussed control system) used for monitoring or controlling one or more parameters associated with the electrical system. As previously discussed, in some embodiments, the control system may be a meter, an IED (e.g., of the at least one IED responsible for capturing the energy-related signals), programmable logic controller (PLC), head-end software (e.g., edge software system), a cloud-based control system, a gateway, a system in which data is routed over the Ethernet or some other communications system, etc.

It is understood that the systems and methods described herein may be responsive to changes in the electrical system(s) in which the systems and methods are provided and/or implemented. For example, the prescribed threshold or thresholds that the at least one identified variation/change is compared to determine if the at least one identified variation/change meets the prescribed threshold or thresholds, may be a dynamic threshold or thresholds that change in response to changes in the electrical system(s). The changes in the electrical system(s) may be detected, for example, from the energy-related signals captured by the at least one IED in the electrical system(s). In one example implementation, the changes are detected after manually training/teaching a system to identify the changes. For example, the specific equipment (or processes) operating at a given time may be described to allow the system to learn (i.e., a form of machine learning). In another example implementation, the changes are detected by automatically identifying operational modes using state of the art machine learning algorithms (e.g., using time series clustering or using spectral or any other algorithms helpful in analysis to identify patterns).

As will become further appreciated from discussions below, the disclosed invention provides, among other features, the ability to characterize voltage, current, and other derived signals to better understand upstream and downstream loads, their operation(s) and impact(s) to the electrical system. The ability to automatically evaluate energy-related data to associate, characterize, quantify, identify, and analyze helps end-users to better understand the operation of their electrical system. It may also provide many more services and solutions opportunities to energy-related companies, such as Schneider Electric, the assignee of the present disclosure.

It is understood that the at least one energy-related waveform capture described in connection with the above method (and the other methods and systems discussed below) may be associated with energy-related signals captured or measured by the at least one IED. For example, in accordance with some embodiments of this disclosure, the at least one energy-related waveform capture may be generated from at least one energy-related signal captured or measured by the at least one IED. According to IEEE Standard 1057-2017, for example, a waveform is "[a] manifestation or representation (e.g., graph, plot, oscilloscope presentation, discrete time series, equations, table of coordinates, or statistical data) or a visualization of a signal." With this definition in mind, the at least one energy-related waveform may correspond to a manifestation or representation or a visualization of the at least one energy-related signal. It is understood that the above relationship is based on one standards body's (IEEE in this case) definition of a waveform, and other relationships between a waveform and a signal are of course possible, as will be understood by one of ordinary skill in the art.

It is understood that the energy-related signals or waveforms captured or measured by the at least one IED may include (or leverage) substantially any electrical parameter derived from at least one of the voltage and current signals (including the voltages and currents themselves), for example. It is also understood that the energy-related signals or waveforms may be continuously or semi-continuously/periodically captured/recorded and/or transmitted and/or logged by the at least one IED. As noted above, the at least one captured energy-related waveform may be analyzed (e.g., in real-time, pseudo-real time, or historically) to determine if the at least one captured energy-related waveform is capable of being compressed, while maintaining relevant attributes for characterization, analysis and/or other use.

In some embodiments, the at least one IED capturing the energy-related waveforms includes at least one metering device. The at least one metering device may correspond, for example, to at least one metering device in the electrical system for which the energy-related waveforms are being captured/monitored.

It is understood that the terms "processor" and "controller" are sometimes used interchangeably herein. For example, a processor may be used to describe a controller. Additionally, a controller may be used to describe a processor.

Embodiments of the present disclosure may comprise a special purpose computer including a variety of computer hardware, as described in greater detail herein.

For purposes of illustration, programs and other executable program components may be shown as discrete blocks. It is recognized, however, that such programs and components reside at various times in different storage components of a computing device, and are executed by a data processor(s) of the device.

Although described in connection with an example computing system environment, embodiments of the aspects of the invention are operational with other special purpose computing system environments or configurations. The computing system environment is not intended to suggest any limitation as to the scope of use or functionality of any aspect of the invention. Moreover, the computing system environment should not be interpreted as having any dependency or requirement relating to any one or combination of components illustrated in the example operating environment. Examples of computing systems, environments, and/or configurations that may be suitable for use with aspects of the invention include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Embodiments of the aspects of the present disclosure may be described in the general context of data and/or processor-executable instructions, such as program modules, stored one or more tangible, non-transitory storage media and executed by one or more processors or other devices. Generally, program modules include, but are not limited to, routines, programs, objects, components, and data structures that perform particular tasks or implement particular abstract data types. Aspects of the present disclosure may also be practiced in distributed computing environments where tasks are performed by remote processing devices that are linked through a communications network. In a distributed computing environment, program modules may be located in both local and remote storage media including memory storage devices.

In operation, processors, computers and/or servers may execute the processor-executable instructions (e.g., software, firmware, and/or hardware) such as those illustrated herein to implement aspects of the invention.

Embodiments may be implemented with processor-executable instructions. The processor-executable instructions may be organized into one or more processor-executable components or modules on a tangible processor readable storage medium. Also, embodiments may be implemented with any number and organization of such components or modules. For example, aspects of the present disclosure are not limited to the specific processor-executable instructions or the specific components or modules illustrated in the figures and described herein. Other embodiments may include different processor-executable instructions or components having more or less functionality than illustrated and described herein.

The order of execution or performance of the operations in accordance with aspects of the present disclosure illustrated and described herein is not essential, unless otherwise specified. That is, the operations may be performed in any order, unless otherwise specified, and embodiments may include additional or fewer operations than those disclosed herein. For example, it is contemplated that executing or performing a particular operation before, contemporaneously with, or after another operation is within the scope of the invention.

When introducing elements of the invention or embodiments thereof, the articles "a," "an," "the," and "said" are intended to mean that there are one or more of the elements. The terms "comprising," "including," and "having" are intended to be inclusive and mean that there may be additional elements other than the listed elements.

Not all of the depicted components illustrated or described may be required. In addition, some implementations and embodiments may include additional components. Variations in the arrangement and type of the components may be made without departing from the spirit or scope of the claims as set forth herein. Additional, different or fewer components may be provided and components may be combined. Alternatively, or in addition, a component may be implemented by several components.

The above description illustrates embodiments by way of example and not by way of limitation. This description enables one skilled in the art to make and use aspects of the invention, and describes several embodiments, adaptations, variations, alternatives and uses of the aspects of the invention, including what is presently believed to be the best mode of carrying out the aspects of the invention. Additionally, it is to be understood that the aspects of the invention are not limited in its application to the details of construction and the arrangement of components set forth in the following description or illustrated in the drawings. The aspects of the invention are capable of other embodiments and of being practiced or carried out in various ways. Also, it will be understood that the phraseology and terminology used herein is for the purpose of description and should not be regarded as limiting.

It will be apparent that modifications and variations are possible without departing from the scope of the invention defined in the appended claims. As various changes could be made in the above constructions and methods without departing from the scope of the invention, it is intended that all matter contained in the above description and shown in the accompanying drawings shall be interpreted as illustrative and not in a limiting sense.

In view of the above, it will be seen that several advantages of the aspects of the invention are achieved and other advantageous results attained.

Accordingly, the present invention may also be described as follows, optionally in combination with one or more of the above-mentioned features of the present invention: Fault or disturbance location detection in an electrical system. Energy-related data in the electrical system is captured using at least one intelligent electronic device (IED) and analyzed to identify fault or disturbance events in the electrical system. The outputs of a plurality of fault or disturbance location detection algorithms include independently ascertained location(s) of the faults or disturbances and a weighted ballot is applied to each of the outputs. The outputs are compiled for determining and providing an indication of the location(s). Compiling the plurality of outputs strengthens the conclusiveness and indicates a higher confidence in the determined location.

## Claims

1. A method for detecting a location of a disturbance event in an electrical system, the method comprising:
acquiring, by at least one Intelligent Electronic Device (IED) of an electrical system, energy-related signals associated with the electrical system;
processing the energy-related data to identify an occurrence of at least one disturbance event in the electrical system;
in response to identifying the occurrence of the at least one disturbance event, applying each of a plurality of disturbance event location detection algorithms to the energy-related data, wherein each of the applied disturbance event location detection algorithms generates an output representative of an independently ascertained candidate location of the at least one disturbance event relative to the IED; and
combining the outputs of the disturbance event location detection algorithms to determine a location or origin of the at least one disturbance event from the candidate locations based on an analysis of the combined outputs.

2. The method as set forth in claim 1, further comprising applying weighted balloting to each output of the applied disturbance event location detection algorithms to generate weighted outputs before combining the outputs.

3. The method as set forth in claim 2, wherein combining the outputs of the disturbance event location detection algorithms comprises aggregating the weighted outputs of the disturbance event location detection algorithms.

4. The method as set forth in any one of claims 2 to 3:
wherein the weighted balloting is implicit or explicit; optionally
wherein the weighted balloting takes into account at least one of a specific algorithm used, availability of relevant data, applications, customer segments, installations, loads, or risks associated with the electrical system.

5. The method as set forth in any one of claims 2 to 4, further comprising executing one or more machine learning algorithms to determine weights for the weighted balloting.

6. The method as set forth in any one of claims 1 to 5:
wherein the disturbance event location detection algorithms are selected based on at least one of a specific algorithm used, availability of relevant data, applications, customer segments, installations, loads, or risks associated with the electrical system; optionally
wherein the disturbance event location detection algorithms are selected from the group consisting of: simple aggregated balloting, confidence-weighted balloting; algorithm-weighted ballot, algorithm and confidence weighting, highest confidence, best algorithm, partial weighting with machine learning, and dynamic weighting to machine learning.

7. The method as set forth in any one of claims 1 to 6, wherein combining the outputs of the disturbance event location detection algorithms to determine the location of the at least one disturbance event from the candidate locations includes providing a measure of confidence in the determined location.

8. The method as set forth in any one of claims 1 to 7, wherein the energy-related data comprise at least one voltage waveform capture and current waveform capture, and further comprising preprocessing the at least one voltage waveform capture and current waveform capture to provide improved waveforms prior to processing the energy-related data.

9. A system for detecting a location of a disturbance event in an electrical system, the system comprising:
at least one Intelligent Electronic Device (IED) communicatively coupled to an electrical system, the IED configured to acquire energy-related signals associated with the electrical system;
a processor receiving and responsive to the energy-related signals acquired by the at least one IED; and
a memory storing processor-executable instructions that, when executed, configure the processor to:
process the energy-related data to identify an occurrence of at least one disturbance event in the electrical system;
in response to identifying the occurrence of the at least one disturbance event, apply each of a plurality of disturbance event location detection algorithms to the energy-related data, wherein each of the applied disturbance event location detection algorithms generates an output representative of an independently ascertained candidate location of the at least one disturbance event relative to the IED; and
combine the outputs of the disturbance event location detection algorithms to determine a location or origin of the at least one disturbance event from the candidate locations based on an analysis of the combined outputs.

10. The system as set forth in claim 9, wherein the processor-executable instructions, when executed, further configure the processor to:
apply weighted balloting to each output of the applied disturbance event location detection algorithms for generating weighted outputs before the outputs are combined; optionally
aggregate the weighted outputs of the disturbance event location detection algorithms for combining the outputs.

11. The system as set forth in claim 10:
wherein the weighted balloting is implicit or explicit; optionally
wherein the weighted balloting takes into account at least one of a specific algorithm used, availability of relevant data, applications, customer segments, installations, loads, or risks associated with the electrical system.

12. The system as set forth in any one of claims 10 to 11, wherein the processor-executable instructions, when executed, further configure the processor to execute one or more machine learning algorithms for determining weights for the weighted balloting.

13. The system as set forth in any one of claims 9 to 12:
wherein the disturbance event location detection algorithms are selected based on at least one of a specific algorithm used, availability of relevant data, applications, customer segments, installations, loads, or risks associated with the electrical system; optionally
wherein the disturbance event location detection algorithms are selected from the group consisting of: simple aggregated balloting, confidence-weighted balloting, algorithm-weighted ballot, algorithm and confidence weighting, highest confidence, best algorithm, partial weighting with machine learning, and dynamic weighting to machine learning.

14. The system as set forth in any one of claims 9 to 13, wherein the processor-executable instructions, when executed, further configure the processor to provide a measure of confidence in the determined location of the at least one disturbance event.

15. The system as set forth in any one of claims 9 to 14, wherein the energy-related data comprise at least one voltage waveform capture and current waveform capture, and wherein the processor-executable instructions, when executed, further configure the processor to preprocess the at least one voltage waveform capture and current waveform capture for providing improved waveforms prior to processing the energy-related data.
